# EUROPEAN PATENT APPLICATION

(11) **EP 1 562 057 A2**
(43) Date of publication of application: **10.08.2005**
(21) Application number: 05250743.1
(22) Date of filing: 09.02.2005
(51) Int. Cl.: G02B 6/00, G02F 1/13357

(54) **Information display module**

(30) Priority: 09.02.2004 GB 0402766
(71) Applicant: Invensys Controls UK Ltd, London, SW1P 1BX (GB)
(72) Inventor: Clark, Lyndon James, Devon, PL16 OLB (GB)
(74) Representative: Badger, John Raymond

(57) **Abstract**

An information display module (1) comprises a liquid display module sandwiched between a back lens module and a transparent front window module, said front window module comprising a main body part (7) and at least one light guide (3) for conducting light from an LED, said light guide (3) and main body part (7) of the front window module being formed integrally with one another and interconnected by a connecting section (5) which defines a tortuous light transmission path whereby a transmission of light from the LED light guide to the main body part of the window module is suppressed.

## Description

The present invention relates to an information display module and in particular, though not exclusively, to an information display module suitable for incorporating in a wall mounted programmable controller of a domestic heating, ventilation or air conditioning system.

A wall mountable programmable controller for display of information typically comprises a box-like housing containing various electronic and other components such as light emitting diodes (LED's) or a liquid crystal display (LCD) mounted on or electrically connected to a printed circuit board which is supported by a back plate of the housing. The controller housing typically comprises an apertured front face to allow viewing of the LED's and I or an LCD.

One conventional type of information display module comprises a back lit liquid crystal display (LCD) unit comprising an LCD module sandwiched between an outward facing transparent window module and a back lens module positioned inwardly within the housing. The window module typically is shaped to fit within an aperture in the front face of the housing. Both the window module and the back lens module commonly are made of plastics materials and formed by injection moulding. The information display module may comprise one or more separate light guides to transmit to the front of the housing light generated by one or more light emitting diodes (LED's).

The manufacturing difficulties experienced in constructing the aforedescribed conventional information display modules include the need to provide a significant number of component parts, thus involving significant time requirements for assembly operations, part procurement, part stocking and handling. Also a particular difficulty can arise in ensuring that an LCD module is accurately positioned within the information display module to align correctly with mating conductor tracks on the printed circuit board to which the module is to be mounted. Another feature of the known information display modules is that a back light facility typically is achieved by the use of side firing LED's mounted on a printed circuit board. However LED's of this type are relatively expensive and unless a plurality are employed, do not readily provide the desired intensity of back light illumination.

It is object of the present invention to provide an information display module, and a controller, in which at least some of the aforedescribed limitations associated with known controllers and information display modules are mitigated or overcome.

In accordance with one aspect of the present invention an information display module comprises a liquid display module sandwiched between a back lens module and a transparent front window module, said front window module comprising a main body part and at least one light guide for conducting light from an LED, said light guide and main body part of the front window module being formed integrally with one another and interconnected by a connecting section which defines a tortuous light transmission path whereby a transmission of light from the LED light guide to the main body part of the window module is suppressed.

The torturous, labyrinth type path may, for example, be non linear or of a convoluted shaped.

The connecting section may comprise a plurality of right angled bends between the light guide and main body part of the window module. An arrangement comprising at least four right angled bends is considered to be particularly advantageous.

The invention envisages that the main window part, connecting section and light guide of the window module are formed integrally from the same transparent material.

The window module may comprise a main part typically of a substantially rectangular shape, and one or more of said light guides may be provided substantially adjacent an edge region of the rectangular shape, but spaced from that edge region by a said connecting section.

The light guide may comprise an outer end which, in use, lies exposed via an aperture in a controller housing, and an inner end which aligns with an LED, such as a top firing LED mounted on a printed circuit board to which the information display module may be secured. Preferably the inner end of the light guide has a non planar surface for confronting an LED. That non planar surface more preferably is convexly shaped thereby to act as a lens to collect and focus light received from an LED and direct it to the outer end of the light guide.

In accordance with another aspect of the present invention an information display module comprises a liquid display module positioned between a back lens module and a transparent front window module, said back lens module comprising a main body part and an input lens projection formed integrally with said main body part, said input lens projection providing a light transmission path between an input end of the input lens projection and said main body part, and said input lens projection being configured to cause a change in the direction of transmission of light between the input end of the lens projection and said main body part of the back lens module.

The input lens projection preferably is configured to bend light through an angle substantially in the order of 90 degrees. In an assembly of said information display module and a printed circuit board to which the module is mounted, said printed circuit board may be provided with a top firing type LED positioned to direct light to the input end of-the input lens projection.

In accordance with yet another aspect of the present invention an information display module comprises a location element for securing the module to a printed circuit board, and a liquid crystal display module securable at least in part relative to said location element, said information display module comprising biasing means to act on the liquid display module and bias said liquid display module towards a datum position defined by the location element.

The location element may be defined by a transparent front window module beneath which the liquid crystal display module is located. The liquid crystal display module may be positioned to lie sandwiched between said transparent front window module and a back lens module. In an alternative configuration in which a back lens module is provided, said back lens module may serve as the location element, and the biasing means may act on the liquid display module to bias it against a datum defined by the back lens module.

The biasing means may be formed integrally with a main body part of the location element. It may be in the form of a finger like projection which provides a biasing force by virtue of the flexibility resistance of the finger. The front window module may comprise a main body part of a substantially rectangular shaped and said biasing means may be provided to act at a shorter side of said rectangular shape to bias the liquid display module against a datum defined by a shorter side of the front window module at the end opposite said biasing means.

The invention provides also an assembly in which, instead of being supported by the information display module, the biasing means may be supported by the printed circuit board to which the display module is to be secured.

Embodiments of the present invention will now be described, by way of example only, with reference to the following diagrammatic drawings in which:-
Figure 1 is a schematic perspective view of a wall mountable programme controller;
Figure 2 is a schematic perspective diagram of an outwardly facing window panel of a display module in accordance with the present invention;
Figure 3a is a perspective view of the other side of the window panel of Figure 2;
Figure 3b is a side view in direction X of Figure 2;
Figure 4 is a plan view of the window panel of Figure 2; and
Figures 5a - 5f are schematic views of a back lens panel of a display module in accordance with the present invention.

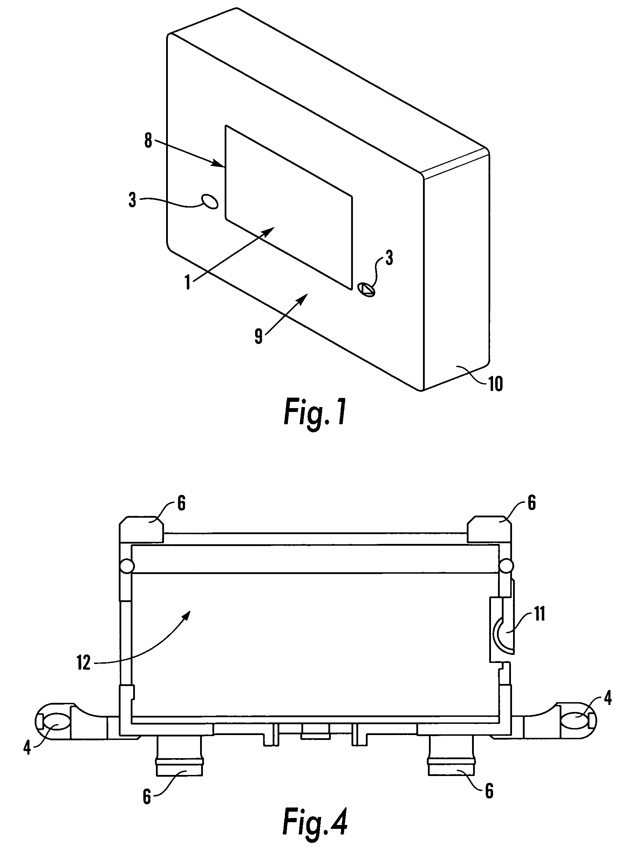

Figures 1 to 3 show views of a window type information display module 1 in accordance with the present invention. The module 1 comprises a rectangular display zone which protrudes through a rectangular opening 8 in a controller front housing 10. The housing 10 additionally comprises a back support plate (not shown) on which a printed circuit board is mounted, and the information display module 1 is located on that printed circuit board thereby to be held in position within the aperture 8. Retention of the information display module 1 relative to a printed circuit board is achieved by means of the snap action spring lugs 6 which engage with accurately positioned openings in the printed circuit board.

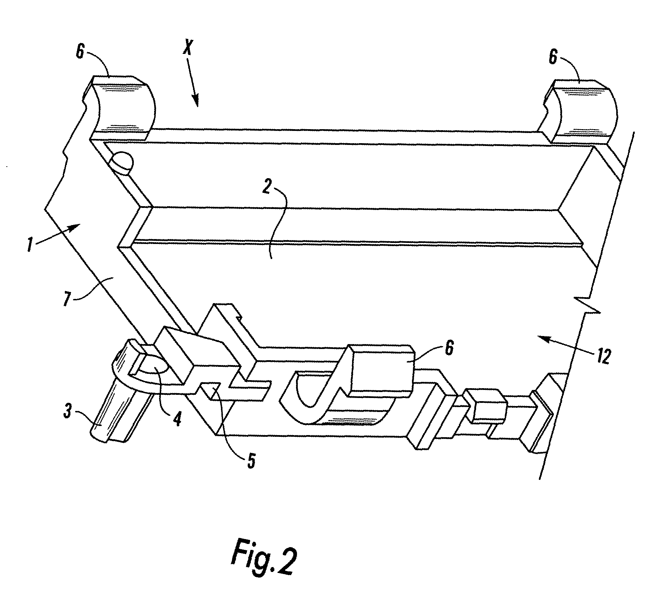

The display module 1 is injection moulded from a transparent plastics material, and the rectangular display area of the module is indicated in Figure 2 by reference 2.

The main part 7 of the window display module 1 has moulded integrally therewith a pair of light guides 3 for conducting light from LED's mounted on the printed circuit board (not shown) to the outer front face of the controller housing 10. The two light guides are provided one each at respective ends of the main part 7. Each of the light guides 3 has at an inner end thereof a convexly shaped surface 4 which collects and focuses the light from an adjacent LED and transmits the light to the front face of controller housing, to be viewable via and aperture in that controller housing for the purpose, for example, of providing a system status indication.

Each of the light guides 3 is connected integrally with the main part 7 of the window module by means of a connecting section 5 of a torturous shape which prevents or at least suppresses the significant transmission of light from the LED guide to the window module main part 7 such that light from each of the LED's does not interfere with any back lighting present in the LCD module of the information display module.

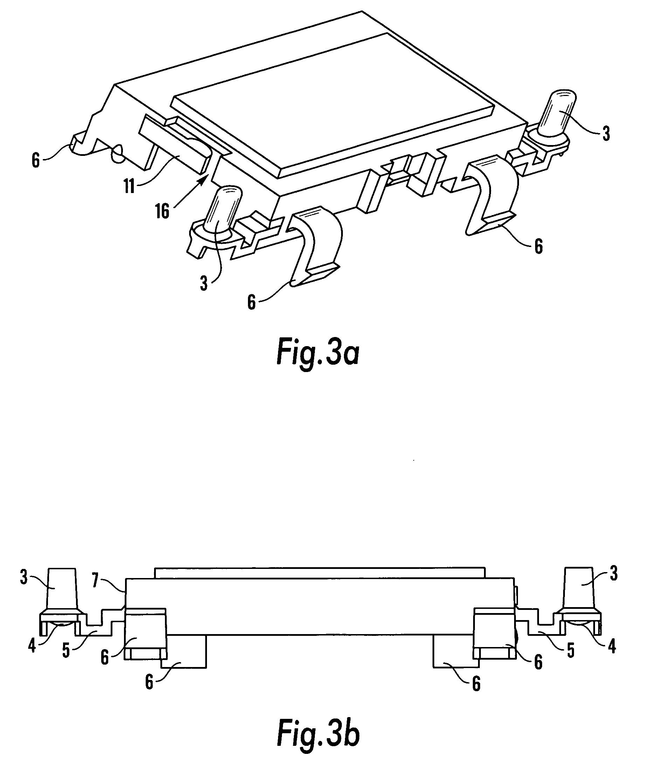

In this embodiment of the invention the tortuous path provided by the connecting section 5 comprises four 90 degree bends (see Figure 3B). It is to be understood, however, that the connecting sections 5 may have a different number of right angle bends or be formed of a different shape which similarly has the effect of suppressing or preventing any significant transmission of light from the LED and which might contaminate the effect of the LCD back lighting.

A particular feature of the provision of LED light guides 3 as an integral moulding with the window module main part 7 is that it provides a reduction in the number of parts required to form the information display module and controller, thus resulting in a saving in assembly operation, time and cost, part procurement, part stocking and handling. It also results in a more efficient use of the light output of the LED's, in particular it assists in achieving a good light intensity.

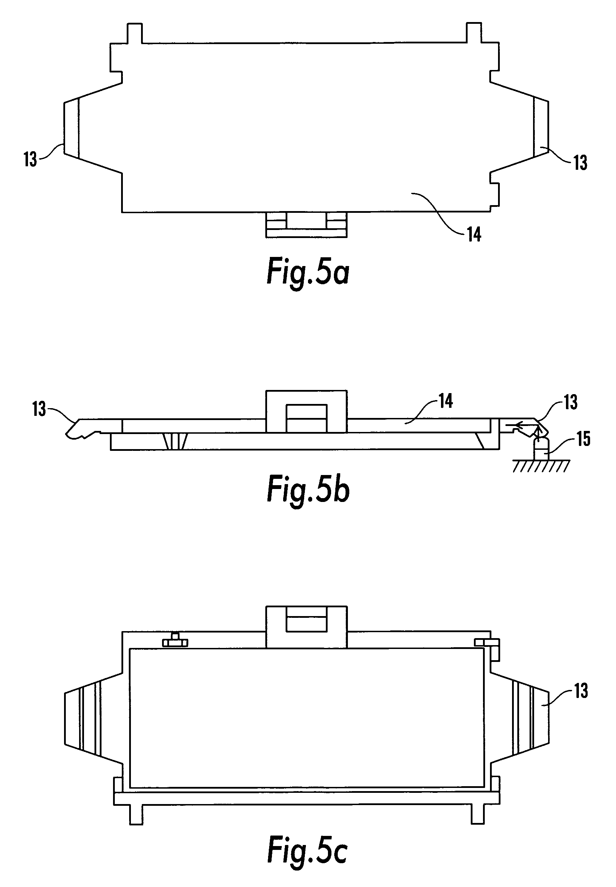

One end of the window information display module 1 (see Figures 3A and 4) has formed integrally therewith a spring finger 11 located in a cut-out region. The spring finger 16 acts on one of the shorter side edges of a rectangularly shaped LCD module (not shown) which is assembled into the recess 12. The spring finger 11 urges the LCD module towards the opposing shorter side edge of the window module 1, said opposing shorter side edge acting as a datum edge which is used to specify the positioning of the connecting ends of an LCD electrical conducting track provided on the window module 1 along one of the two longer side edges thereof. Accordingly the presence of the spring finger 11 readily facilitates the required alignment between the LCD conductor tracks provided along a longer side edge of the window module 1 and the mating conductor tracks on the printer circuit board relative to which the module 1 is accurately positioned by means of the aforedescribed spring lugs 6.

This arrangements results in a significant advantage over conventional type assemblies in which, because of the significant variation which can arise in the overall tolerance of the length of an LCD, conventional designs need to have large clearances between the LCD unit and the window panel. This is necessary to ensure that the two parts always fit together despite the manufacturing tolerances. However, with conventional assemblies the greater the clearance between the fit of the two parts, the worse the alignment between the conductor tracks on the LCD unit and the printed circuit board. Conventionally those two tracks are interconnected by means of an elastromeric electrical connector, and in a conventional assembly there is a significant risk that the elastromeric electrical connector will not provide the required electrical connection between the two tracks. In the aforedescribed arrangement the provision of the spring finger 11 formed integrally with the main part of the window module 1 acts to bias the LCD module to the opposite datum edge and thereby, in use, ensures improved alignment between the LCD conductor tracks and the mating tracks on the printed circuit board. The reject rate of assembled components is thereby reduced.

In the illustrated embodiment of the invention the spring finger 11 is formed integrally with the window display module 1 but alternatively it may be formed integrally with a back lens module. In a further alternative, in an assembly of the information display module and the printed circuit board, the biasing means may be secured to the printer circuit board and arranged to bear against an end of the LCD module in the resulting assembly.

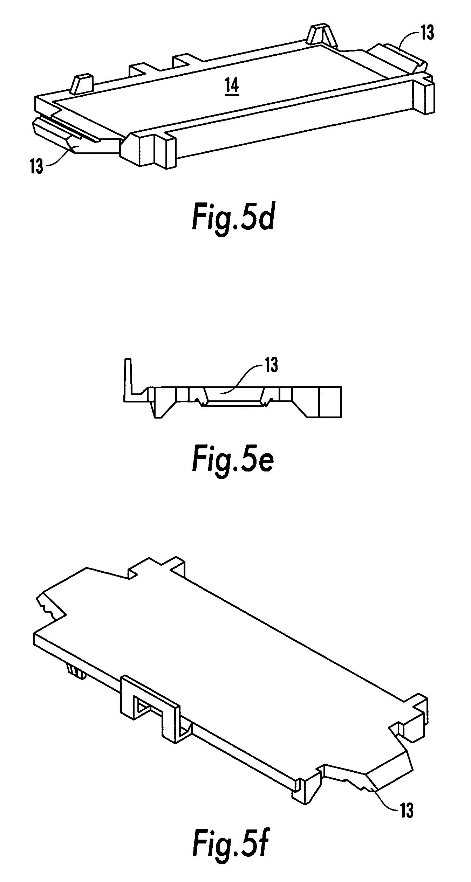

Figures 5a to 5f show details of a back lens module 14 of the information display module 1. The back lens module is secured to the front window module with the LCD display module sandwiched there between. The back lens module facilitates provision of a back lighting feature to the LCD display module. In this embodiment of the invention the back lens module is moulded from a light transmitting thermoplastic material.

Conventional back lit LCD products typically use side firing LED's mounted on the printed circuit board. These side firing LED's are relatively expensive and offer lower light intensities and a fewer range of colours than conventional LED's. Because of the relatively low light intensity of side firing LED's several of them are required to achieve a high quality back light.

The back lens component of the module of the present invention is provided on opposite sides of the main body 14 with two input lens projections 13 which are formed integrally with the main body 14. The input lens projections 13 have the characteristic of deflecting the light emitted by an adjacent LED 15, mounted on the printed circuit board, through 90 degrees as depicted in the right hand side of Figure 5b. The input lens projection thus permits the use of normal, top firing LED's to provide light which travels through the main body 14 of the back lens component. Since the input lens projections enable the use of the higher intensity conventional type LED, fewer LED's are required to achieve an acceptable level of back lighting and indeed the applicants have found that a single LED on each side may be used.

The ability to use the higher intensity conventional LED also has the advantage of providing greater design flexibility because the LCD unit can be further away from the LED. In contrast, using conventional side firing LED's to provide back lighting requires the back lens and the LCD to be in close contact with the side firing LED's.

## Claims

1. An information display module (1) comprising a liquid display module sandwiched between a back lens module and a transparent front window module, said front window module comprising a main body part (7) and at least one light guide (3) for conducting light from an LED, **characterised in that** said light guide (3) and main body part (7) of the front window module are formed integrally with one another and interconnected by a connecting section (5) which defines a tortuous light transmission path whereby a transmission of light from the LED light guide to the main body part of the window module is suppressed.

2. An information display module in accordance with claim 1, **characterised in that** the connecting section (5) comprises a plurality of right angled bends between the light guide and the window module main body.

3. An information display module in accordance with any one of the preceding claims, **characterised in that** the main window part (7), connecting section (5) and said light guide (3) are formed integrally from the same light conducting material.

4. An information display module in accordance with any one of the preceding claims, **characterised in that** the light guide comprises an inner end (4) of -non-planar shape for receiving light from an LED.

5. An information display module in accordance with claim 4, **characterised in that** said inner end (4) is of a convex shape.

6. An information display module (1) comprising a location element for securing the module to a printed circuit board, and a liquid crystal display module securable at least in part relative to said location element, **characterised in that** said information display module (1) comprises biasing means (11) to act on the liquid display module and bias said liquid display modufe towards a datum position defined by the location element.

7. An information display module in accordance with claim 6, **characterised in that** the biasing means comprises a finger shaped projection (11).

8. An information display module in accordance with claim 6 or claim 7, **characterised in that** the biasing means is integrally formed with the location element.

9. An information display module in accordance with any one of claims 6 to 8, **characterised in that** the information display module comprises a front window module of a rectangular shape and an integrally formed biasing means is provided on one of the two shorter sides of said front window module.

10. An assembly comprising an in formation display module in accordance with any one of claims 6 to 9 and a support to which the display module is secured, said support comprising a said biasing means.
